# EUROPÄISCHE PATENTANMELDUNG

(11) **EP 3 006 834 A1**
(43) Veröffentlichungstag der Anmeldung: **13.04.2016**
(21) Anmeldenummer: 14188372.8
(22) Anmeldetag: 09.10.2014
(51) Int. Cl.: F24D 3/14, F24D 13/02, H05B 3/20

(54) **FLÄCHENKLIMATISIERUNGSSYSTEM**

(71) Anmelder: Protion GmbH, 72660 Beuren (DE)
(72) Erfinder: Buschulte, Rainer, 72660 Beuren (DE)
(74) Vertreter: Clarenbach, Carl-Philipp

(57) **Zusammenfassung**

Die Erfindung betrifft Flächenklimatisierungssystem (2), mit mehreren gleich ausgebildeten Flächenklimatisierungselementen (1), die jeweils einen rechteckigen Grundkörper (3), wenigstens ein an dem jeweiligen Grundkörper (3) angeordnetes und ansteuerbares Klimatisierungselement (29) und Anschlüsse (15, 18) zum Kontaktieren des Klimatisierungselements (29) aufweisen, wobei das Klimatisierungselement (29) einen ersten der Anschlüsse (15) mit einem zweiten der Anschlüsse (18) verbindet, und wobei der erste Anschluss (15) und der zweite Anschluss (18) an unterschiedlichen Seitenkanten (4,6) des Grundkörpers (3) angeordnet sind, und mit mindestens einem Verbindungselement (21, 26) zur Verbindung der Anschlüsse (15, 18) benachbarter Flächenklimatisierungselemente (1). Es ist vorgesehen, dass der erste Anschluss (15) mit einem ersten Nebenanschluss (15') wirkverbunden ist, der zumindest derselben Seitenkante (4) wie der erste Anschluss (15) zugeordnet ist, und/oder dass der zweite Anschluss (18) mit einem zweiten Nebenanschluss (18') wirkverbunden ist, der zumindest derselben Seitenkante (6) wie der zweite Anschluss (18) zugeordnet ist, und dass die Flächenklimatisierungselemente (1) derart ausgebildet sind, dass das Verbindungselement (21, 26) wahlweise derart anordenbar/angeordnet ist, dass es entweder für eine Serienschaltung benachbarter Flächenklimatisierungselemente (1) einen ersten Anschluss (15) mit einem gegenüberliegenden zweiten Anschluss (18) der benachbarten Flächenklimatisierungselemente (1) oder für eine Parallelschaltung der benachbarten Flächenklimatisierungselemente (1) erste Nebenanschlüsse (15') oder zweite Nebenanschlüsse (18) der benachbarten Flächenklimatisierungselemente (1) miteinander verbindet.

## Beschreibung

Die Erfindung betrifft ein Flächenklimatisierungssystem mit mehreren gleich ausgebildeten Flächenklimatisierungselementen (oder Flächenklimatisierungsmodulen), die jeweils einen rechteckigen Grundkörper, wenigstens ein an dem jeweiligen Grundkörper angeordnetes und ansteuerbares Klimatisierungselement und Anschlüsse zum Kontaktieren des Klimatisierungselements aufweisen, wobei das Klimatisierungselement einen ersten der Anschlüsse mit einem zweiten der Anschlüsse verbindet, und wobei der erste Anschluss und der zweite Anschluss an unterschiedlichen Seitenkanten des Grundkörpers angeordnet sind, und mit Verbindungselementen zur Verbindung von Anschlüssen benachbarter Flächenklimatisierungselemente.

Ferner betrifft die Erfindung ein Flächenklimatisierungselement für ein derartiges Flächenklimatisierungssystem.

Flächenklimatisierungssysteme und Flächenklimatisierungselemente sind aus dem Stand der Technik bereits bekannt. Insbesondere aus dem Bereich der Fußbodenheizungen oder Wandheizungen sind Flächenklimatisierungssysteme bekannt, die einen Boden- oder Wandabschnitt aus einer Vielzahl von Flächenklimatisierungselementen bilden, die an ihren Seitenkanten aneinander anliegen und miteinander wirkverbunden sind. Insbesondere sind elektrische Flächenklimatisierungssysteme bekannt, die als Klimatisierungselement ein elektrisch betreibbares Heizelement aufweisen. Die Flächenklimatisierungselemente weisen an ihren Seitenkanten zur einfachen elektrischen Kontaktierung entsprechende Anschlüsse auf, die es insbesondere erlauben, durch ein Verbindungselement zwei benachbarte Flächenklimatisierungselemente durch ein einfaches Zusammenstecken elektrisch miteinander zu verbinden. Dadurch können eine Flächenklimatisierungswand und ein Flächenklimatisierungsboden auf einfache Art und Weise auch bei Vorhandensein nur einer einzigen Spannungsquelle betrieben werden.

Bekannte Flächenklimatisierungssysteme gehen beispielsweise aus der Gebrauchsmusterschrift DE 20 2005 019 835 U1 oder aus der Gebrauchsmusterschrift DE 20 2006 007 731 U1 hervor. Die bekannten Flächenklimatisierungssysteme haben den Nachteil, dass schon vor der Installation entschieden sein muss, ob die benachbarten Flächenklimatisierungselemente elektrisch in Reihe oder in Serie geschaltet werden sollen, da sich hierdurch unterschiedliche Bedingungen für die Anschlüsse und deren Verbindung miteinander ergeben, die nicht ohne weiteres erfüllt werden können.

Die Offenlegungsschrift DE 33 47 492 A1 schlägt dazu vor, Brückenstecker als Verbindungselemente zum Verbinden benachbarter Flächenklimatisierungselemente vorzusehen, die intern unterschiedlich verdrahtet sind, sodass je nach Verdrahtung des gewählten Brückensteckers eine Reihenschaltung oder eine Parallelschaltung realisierbar ist. Nachteilig bei der offenbarten Lösung ist es, dass Stecker mit gleicher Form, jedoch unterschiedlicher interner Verdrahtung vorliegen, die eine korrekte Montage erschweren, und dass andererseits die Anschlüsse nicht an den Stoßkanten benachbarter Flächenklimatisierungselemente liegen, sondern an den miteinander fluchtenden Seitenkanten, wodurch für die Brückenstecker ein zusätzlicher Bauraum notwendig ist.

Der Erfindung liegt somit die Aufgabe zugrunde, ein Flächenklimatisierungssystem sowie ein Flächenklimatisierungselement zu schaffen, die bei der Montage die Entscheidung zwischen einer Parallelschaltung oder Reihenschaltung erlauben, die einfach und korrekt zu montieren sind und die durch die zur Verbindung notwenigen Steckverbinder keinen unnötigen Bauraum beanspruchen.

Die der Erfindung zugrunde liegende Aufgabe wird durch ein Flächenklimatisierungssystem mit den Merkmalen des Anspruchs 1 gelöst. Dies hat den Vorteil, dass aufgrund nur weniger Einzelteile und einem einfachen Aufbau der Einzelteile des Flächenklimatisierungssystems und insbesondere der Flächenklimatisierungselemente eine einfache und kostengünstige Herstellung des Flächenklimatisierungssystems und der Flächenklimatisierungselemente ermöglicht wird, die insbesondere für eine industrielle Massenproduktion geeignet ist. Weiterhin führt die Erfindung zu dem Vorteil, dass auf einfache Art und Weise bei der Montage des Flächenklimatisierungssystems entschieden werden kann, ob benachbarte Flächenklimatisierungselemente parallel oder in Reihe geschaltet werden. Dies wird dadurch entschieden, dass das Verbindungselement entweder mit dem ersten Anschluss und dem zweiten Anschluss benachbarter Flächenklimatisierungselemente oder mit den ersten Nebenanschlüssen oder zweiten Nebenanschlüssen der benachbarten Flächenklimatisierungselementen verbunden wird. Dadurch kann auf einfache Art und Weise in Abhängigkeit von der Positionierung und Anordnung des Verbindungselements bei der Montage zwischen der Serienschaltung und der Parallelschaltung der benachbarten Flächenklimatisierungselemente unterschieden werden. Erfindungsgemäß ist vorgesehen, dass der erste Anschluss mit einem ersten Nebenanschluss wirkverbunden ist, der zumindest derselben Seitenkante wie der erste Anschluss zugeordnet ist, und/oder dass der zweite Anschluss mit einem zweiten Nebenanschluss wirkverbunden ist, der zumindest derselben Seitenkante wie der zweite Anschluss zugeordnet ist, und dass die Flächenklimatisierungselemente derart ausgebildet sind, dass das Verbindungselement wahlweise derart anordenbar oder angeordnet ist, dass es entweder für eine Serienschaltung benachbarter Flächenklimatisierungselemente einen ersten Anschluss mit einem gegenüberliegenden zweiten Anschluss der benachbarten Flächenklimatisierungselemente oder für eine Parallelschaltung der benachbarten Flächenklimatisierungselemente erste Nebenanschlüsse oder zweite Nebenanschlüsse der benachbarten Flächenklimatisierungselemente miteinander verbindet. Der Anwender oder Monteur/Installateur kann somit durch die Positionierung des Verbindungselements bestimmen, ob die benachbarten Flächenklimatisierungselemente in Serie oder Parallel geschaltet werden. Dabei wird davon ausgegangen, dass die benachbarten Flächenklimatisierungselemente derart ausgerichtet sind, dass ein erstes Flächenklimatisierungselement mit der einen Seitenkante, die den ersten Anschluss aufweist, und das andere Flächenklimatisierungselement mit der anderen Seitenkante, die den zweiten Anschluss aufweist, einander gegenüberliegen, sodass das Verbindungselement zwischen den einander gegenüberliegenden Seitenkanten bei der Montage anzuordnen ist. Für eine Parallelschaltung wird von der gleichen Anordnung der Flächenklimatisierungselemente ausgegangen, sodass auch in diesem Fall das Verbindungselement zwischen den einander gegenüberliegenden unterschiedlichen Seitenkanten der beiden benachbarten Flächenklimatisierungselementen anzuordnen ist. Vorzugsweise sind die Flächenklimatisierungselemente gleich und in Bezug auf ihre Anschlüsse spiegelsymmetrisch ausgebildet, sodass bei der Montage Anschlüsse und Nebenanschlüsse benachbarter Flächenklimatisierungselemente stets einander gegenüberliegen. Die Montage ist dadurch besonders leicht durchführbar, weil sich aus dem Flächenklimatisierungssystem ein Flächenverbund von Flächenklimatisierungselementen ergibt, die durch ein oder mehrere der Verbindungselemente miteinander wirkverbunden und baukastenartig aufbaubar sind.

Eine bevorzugte Weiterbildung der Erfindung zeichnet sich durch die Merkmale des Anspruchs 2 aus. Hierdurch ergibt sich der Vorteil, dass der Grundkörper selbst Vorkehrungen aufweist, die eine Parallelschaltung oder Reihenschaltung (Serienschaltung) benachbarter Klimatisierungselemente auf einfache Weise erlaubt, wobei bei der Montage der Unterschied zwischen Reihenschaltung und Parallelschaltung offensichtlich ist, und wobei insbesondere am Randbereich der Flächenklimatisierungselemente der Bauraum optimal ausgenutzt wird, sodass die Effizienz des jeweiligen Flächenklimatisierungselements optimiert ist. Hierzu ist vorgesehen, dass der Grundkörper mindestens einen Aufnahmekanal aufweist, der sich von einer der Seitenkanten zu der anderen der Seitenkanten erstreckt, wobei der erste Nebenanschluss oder der zweite Nebenanschluss dem Aufnahmekanal zugeordnet ist, und dass für die Parallelschaltung wenigstens ein Verlängerungselement in dem Aufnahmekanal angeordnet ist, das den ersten oder zweiten Nebenanschluss von der einen Seitenkante zu der anderen Seitenkante der unterschiedlichen Seitenkanten verlängert. Dadurch wird erreicht, dass der erste oder der zweite Nebenanschluss an beiden Seitenkanten des Grundkörpers beziehungsweise des Flächenklimatisierungselementes auf einfache Art und Weise kontaktierbar ist, sodass das Klimatisierungselement überbrückt und eine Parallelschaltung eingerichtet werden kann.

Besonders bevorzugt ist vorgesehen, dass der Grundkörper zwei Aufnahmekanäle aufweist, die sich von einer der Seitenkanten zu der anderen der Seitenkanten erstrecken, wobei der erste Anschluss mit dem ersten Nebenanschluss und der zweite Anschluss mit dem zweiten Nebenanschluss wirkverbunden ist, wobei die Nebenanschlüsse jeweils einem der Aufnahmekanäle zugeordnet sind, beziehungsweise wobei jedem Aufnahmekanal jeweils einer der Nebenanschlüsse zugeordnet ist. Für die Serienschaltung benachbarter Flächenklimatisierungselement ist vorzugsweise wenigstens ein erstes Verbindungselement vorgesehen, das einen ersten Anschluss mit einem zweiten Anschluss benachbarter Flächenklimatisierungselemente verbindet, und für die Parallelschaltung benachbarter Flächenklimatisierungselemente wenigstens ein zweites Verbindungselement, das in einem der Aufnahmekanäle angeordnet erste Nebenanschlüsse oder zweite Nebenanschlüsse benachbarter Flächenklimatisierungselemente miteinander verbindet. Es ist also vorgesehen, dass ein Benutzer bei der Montage zwischen zwei unterschiedlichen Verbindungselementen wählen kann, die unterschiedlich zwischen benachbarten Flächenklimatisierungselementen montiert werden. In diesem Fall hat der Monteur somit nicht nur zwischen unterschiedlichen Positionen für das Verbindungselement zwischen den benachbarten Flächenklimatisierungselementen zu entscheiden, sondern auch über das zu wählende Verbindungselement. Dadurch kann beispielsweise vermieden werden, dass zusätzlich das Verlängerungselement in einem der Kanäle vor der Montage des Verbindungselements angeordnet werden muss. So kann beispielsweise vorgesehen sein, dass das zweite Verbindungselement, das für die Parallelschaltung vorgesehen ist, aus dem ersten Verbindungselement und dem daran angeordneten, insbesondere einstückig damit ausgebildeten, Verlängerungselement besteht, sodass bei der Montage des Verbindungselements das Verlängerungselement gleich mitmontiert wird.

Weiterhin ist bevorzugt vorgesehen, dass das Verbindungselement oder die Verbindungselemente jeweils als Steckverbinder ausgebildet sind. Durch die Ausbildung als Steckverbinder lassen sich die Verbindungselemente bei einer Montage auf einfache Art und Weise zur Verbindung der jeweiligen Anschlüsse oder Verbindungsanschlüsse miteinander anordnen. Durch die Ausbildung als Steckverbinder wird darüber hinaus erreicht, dass ein Steckverbinder an einem der Flächenklimatisierungselemente vormontiert und durch Zusammenschieben benachbarter Flächenklimatisierungselemente automatisch mit dem jeweiligen Anschluss oder Nebenanschluss des weiteren Flächenklimatisierungselementes in Verbindung gebracht beziehungsweise zusammengesteckt wird. Hierdurch wird eine einfache Montage gewährleistet. Insbesondere ist vorgesehen, dass der oder die Steckverbinder als Verbindungszapfen ausgebildet sind, die an ihren freien Enden insbesondere mit jeweils einer Einführhilfe, vorzugsweise in Form einer kegelförmigen Spitze, versehen sind. Dadurch ist der jeweilige Steckverbinder auf einfache Art und Weise mit den insbesondere als Steckverbinderaufnahmen ausgebildeten Anschlüssen beziehungsweise Nebenanschlüssen verbindbar. Das erste Verbindungselement bildet bevorzugt dabei einen ersten Steckverbinder und das zweite Verbindungselement einen zweiten Steckverbinder. Der erste Steckverbinder ist insbesondere dafür vorgesehen, den ersten Anschluss eines ersten Flächenklimatisierungselements mit dem zweiten Anschluss eines zweiten Flächenklimatisierungselements zu verbinden, sodass eine Serienschaltung der benachbarten Flächenklimatisierungselemente entsteht. Alternativ kann der Benutzer den zweiten Steckverbinder wählen, den er in einem der Aufnahmekanäle des Grundkörpers anzuordnen hat und der insbesondere das Verlängerungselement aufweist, um beispielsweise den ersten Nebenanschluss eines ersten Flächenklimatisierungselements mit dem ersten Nebenanschluss eines zweiten Flächenklimatisierungselements zu verbinden. Dadurch, dass der Grundkörper für die Parallelschaltung insbesondere zwei Aufnahmekanäle aufweist, die sich von der einen Seitenkante bis zur anderen Seitenkante erstrecken, wird nunmehr ein System bereitgestellt, dessen Flächenklimatisierungselemente an gegenüberliegenden Seitenkanten miteinander verbindbar sind, sowohl in Serienschaltung als auch in Parallelschaltung. Vorzugsweise weist das Flächenklimatisierungssystem eine Vielzahl der Verbindungselemente oder der ersten und zweiten Verbindungselemente auf, so wie eine Vielzahl der Flächenklimatisierungselemente, um aus dem System einen Flächenverbund aus mehreren Flächenklimatisierungselementen zu bilden, die durch jeweils mindestens ein Verbindungselement miteinander wirkverbunden sind.

Dadurch, dass der jeweilige Nebenanschluss in den zugeordneten Aufnahmekanal bevorzugt hineinragt, können diese in dem Aufnahmekanal auf einfache Art und Weise kontaktiert werden. Insbesondere ist vorgesehen, dass der Aufnahmekanal als Aufnahmetunnel ausgebildet ist, und der jeweilige Nebenanschluss als Nebensteckanschluss. Durch Einschieben des zweiten Steckverbinders oder des Verlängerungselements in den jeweiligen Aufnahmekanal beziehungsweise Aufnahmetunnel hinein, kann dieser somit auf einfache Art und Weise mit dem in den Aufnahmekanal hineinragenden Nebenanschluss durch Zusammenstecken wirkverbunden werden. Vorzugsweise ist der jeweilige Nebenanschluss T-förmig in den jeweiligen Aufnahmekanal eingeführt/ausgebildet, sodass er in beide Richtungen des Aufnahmekanals jeweils einen Steckanschluss aufweist, um die Parallelschaltung weiterzuführen. Dadurch, dass sich der jeweilige Aufnahmekanal von der einen Seitenkante bis zur anderen Seitenkante erstreckt, ist er an den jeweiligen Seitenkanten randoffen ausgebildet und insofern bei der Montage einfach zugänglich.

Weiter ist es bevorzugt vorgesehen, dass eine maximale Breite des jeweiligen Steckverbinders und/oder des Verlängerungselements zumindest im Wesentlichen der Breite der Aufnahmekanäle entspricht. Dadurch wird erreicht, dass die zweiten Steckverbinder in den Aufnahmekanälen im Wesentlichen formschlüssig und vorzugsweise wenigstens im Wesentlichen spielfrei gehalten sind. Dadurch werden zum einen Klappergeräusche vermieden, zum anderen lässt sich durch das Einführen des zweiten Steckverbinders oder des Verlängerungselements in einen der Aufnahmekanäle dieser einfach und eindeutig mit dem jeweiligen Verbindungsanschluss kontaktieren, da der zweite Steckverbinder durch den jeweiligen Aufnahmekanal beim Einführen sicher geführt wird. Die Nebenanschlüsse, die insbesondere in den jeweiligen Aufnahmekanal hineinragen, sind entsprechend fest in dem jeweiligen Aufnahmekanal angeordnet. Besonders bevorzugt ist vorgesehen, dass die Nebenanschlüsse und die zweiten Steckverbinder und/oder Verlängerungselement, vorzugsweise auch die ersten Anschlüsse und die ersten Steckverbinder, Einführhilfen -wie bereits erwähnt- aufweisen, die ein Zusammenstecken der Verbindungsanschlüsse mit den zweiten Steckverbindern beziehungsweise der ersten Anschlüsse mit den ersten Steckverbindern erleichtern. Bei den Einführhilfen handelt es sich insbesondere um Zentrierschrägen.

Gemäß einer bevorzugten Weiterbildung der Erfindung ist weiterhin vorgesehen, dass der erste Anschluss mit dem ersten Nebenanschluss und der zweite Anschluss mit dem zweiten Nebenanschluss jeweils eine Anschlussleiste bilden. Somit sind dann an dem Grundkörper eine erste und eine zweite Anschlussleiste angeordnet. Durch die Ausbildung als Anschlussleisten bilden jeweils ein Anschluss und ein Nebenanschluss eine feste Einheit, die insbesondere einstückig ausgebildet ist. Dadurch wird die Robustheit des Systems erhöht. Gleichzeitig wird der Montage- und Herstellungsaufwand verringert.

Bevorzugt ist vorgesehen, dass der Grundkörper den unterschiedlichen, insbesondere gegenüberliegenden Seitenkanten zugeordnet jeweils eine Aufnahmevertiefung aufweist, in welche jeweils eine der Anschlussleisten eingesteckt ist. Durch das Einstecken der Anschlussleisten in die jeweilige Aufnahmevertiefung wird eine sichere Arretierung der Anschlüsse und Nebenanschlüsse an den Grundkörper gewährleistet, wodurch eine einfache und sichere Montage möglich ist. Vorzugsweise werden die Anschlussleisten bereichsweise an dem Grundkörper verklebt, um ein Lösen der Anschlussleisten vom Grundkörper sicher zu verhindern.

Ferner ist bevorzugt vorgesehen, dass die Aufnahmevertiefungen jeweils einen randoffenen Anschlusskanal aufweisen, in welchem jeweils einer der ersten Anschlüsse anordenbar ist. Ähnlich wie die zweiten Steckverbinder sind somit auch die ersten Steckverbinder in Vertiefungen des Grundkörpers einlegbar beziehungsweise einschiebbar. Durch die insbesondere eingesteckte Anordnung der jeweiligen Anschlussleiste in den Grundkörper kann durch Einschieben beziehungsweise Einstecken des jeweiligen Steckverbinders in den jeweiligen Anschlusskanal ein Zusammenstecken von Steckverbinder und ersten Anschluss auf einfache Art und Weise gewährleistet werden. Durch Zusammenschieben benachbarter Flächenklimatisierungselemente und vorherigem Vorsehen eines entsprechenden Steckverbinders zwischen diesen, lassen sich somit benachbarte Flächenklimatisierungselemente auf einfache Art und Weise bei der Montage miteinander wirkverbinden. Gleiches gilt vorzugsweise auch für die Montage mit den zweiten Verbindungselementen.

Gemäß einer vorteilhaften Weiterbildung der Erfindung ist weiterhin vorgesehen, dass die Anschlussleisten als elektrische Anschlussleisten, beispielsweise zur elektrischen Kontaktierung eines elektrischen Heizelements, oder als hydraulische Anschlussleisten, beispielsweise zur fluidtechnischen Verbindung benachbarter Flächenklimatisierungselemente die durch ein Kühl- oder Heizfluid beaufschlagbar sind, zu verbinden. Dadurch kann ein elektrisches Flächenklimatisierungssystem oder ein fluidtechnisches Flächenklimatisierungssystem zur Verfügung gestellt werden. Zur elektrischen Kontaktierung sind die Verbindungselemente beziehungsweise die Steckverbinder insbesondere aus elektrisch leitfähigem Material gefertigt, sodass sie selbst die elektrische Verbindung zwischen den Anschlussleisten benachbarter Flächenklimatisierungselemente herstellen. Sind die Anschlussleisten als hydraulische Anschlussleisten ausgebildet, so sind die Verbindungselemente beziehungsweise die Steckverbinder insbesondere als röhrenförmige oder hülsenförmige Körper ausgebildet, die einen Fluidkanal zur Verfügung stellen, durch welchen Fluid von einer ersten Anschlussleiste zu einer ersten oder zweiten Anschlussleiste des benachbarten Flächenklimatisierungselements geführt werden kann. Alternativ ist vorgesehen, dass bei einer hydraulischen Ausführung die Verbindungselemente als Schraubverbinder ausgebildet sind, die an ihren freien Enden mit jeweils einem Gewinde versehen sind, wobei die Gewinde mit entsprechenden Gegengewinden der Anschlüsse oder Nebenanschlüsse zu ihrer Befestigung zusammenwirken.

Ferner ist bevorzugt vorgesehen, dass die elektrischen Anschlussleisten jeweils eine Elektrode aufweisen, die auf einer Oberfläche des Grundkörpers aufliegen. Die Elektroden zeichnen sich insbesondere durch eine flächige Ausgestaltung aus, und sind vorzugsweise einstückig mit der jeweiligen Anschlussleiste ausgebildet.

Besonders bevorzugt sind die Elektroden eines Flächenklimatisierungselementes durch ein das Klimatisierungselement bildendes elektrisch betreibbares Heizelement, insbesondere in Form einer CNT-Schicht, verbunden. Durch die flächige Ausbildung der Elektroden kann das Heizelement vorteilhaft mit der Anschlussleiste verbunden werden. Insbesondere ist es dadurch möglich, die CNT-Schicht sicher mit den Elektroden auch großflächig zu verbinden. Die CNT-Schicht erstreckt sich zweckmäßigerweise über nahezu den gesamten Grundkörper, von der Elektrode der ersten Anschlussleiste bis zu der Elektrode der zweiten Anschlussleiste.

Vorzugsweise ist vorgesehen, dass das Heizelement eine zumindest im Wesentlichen ebene Oberfläche des Flächenklimatisierungselementes bildet. Durch das Heizelement beziehungsweise die CNT-Schicht wird somit dem Flächenklimatisierungselement jeweils eine zumindest im Wesentlichen ebene Oberfläche zur Verfügung gestellt. Im Verbund, also als montiertes Flächenklimatisierungssystem, steht dann eine im Wesentlichen durchgängige ebene Oberfläche zur Verfügung, die eine Integration in eine Wand eines Raumes auch designtechnisch vorteilhaft erlaubt.

Gemäß einer vorteilhaften Weiterbildung der Erfindung ist vorgesehen, dass wenigstens ein Flächensteuerelement beziehungsweise Steuerflächenelement vorgesehen ist, das eine den Flächenklimatisierungselementen entsprechende Höhe aufweist, und an einer Seitenkante zumindest eines Flächenklimatisierungselementes anordenbar und durch die ersten oder die zweiten Steckverbinder beziehungsweise durch das Verbindungselement und/oder das Verlängerungselement mit den Anschlussleisten des Flächenklimatisierungselementes verbindbar ist. In den Verbund des Flächenklimatisierungssystems ist somit ein Flächensteuerelement einbringbar, das vorzugsweise die gleichen Abmessungen/Dimensionen aufweist, wie die Flächenklimatisierungselemente, um eine vorteilhafte Integration in den Flächenverbund zu gewährleisten. Das Flächensteuerelement weist vorzugsweise eine Steuer- und/oder Leistungselektronik auf, durch welche zumindest einige der Flächenklimatisierungselemente des Flächenverbunds ansteuerbar sind. Insbesondere ist es vorgesehen, dass für einen Flächenverbund mehrere Flächensteuerelemente verwendet werden, sodass eine erste Gruppe von Flächenklimatisierungselementen unabhängig von zumindest einer zweiten Gruppe von Klimatisierungselementen ansteuerbar und beispielsweise in ihrer Heizleistung regelbar ist. Zweckmäßigerweise weist das Flächensteuerelement wenigstens eine Anschlussleiste auf, die der ersten oder zweiten Anschlussleiste der Flächenklimatisierungselemente entspricht, um eine einfache Wirkverbindung mit den Flächenklimatisierungselementen durch das jeweilige Verbindungselement zu ermöglichen.

Besonders bevorzugt ist vorgesehen, dass I-förmige Profilleisten vorgesehen sind, die zwischen benachbarten Flächenklimatisierungselementen und/oder Flächensteuerelementen zu deren Ausrichtung zueinander anordenbar sind. Die I-förmigen Profilleisten umgreifen jeweils den Randbereich eines Flächenklimatisierungselements formschlüssig, sodass die benachbarten Flächenelemente in ihrer Höhe zueinander ausgerichtet werden. Vorzugsweise weisen die Flächenklimatisierungselemente und/oder die Flächensteuerelemente an ihrem Randbereich jeweils eine Verjüngung auf, die zur Aufnahme des I-Profils dient, sodass insgesamt ein Flächenverbund mit einer durchgehenden Oberfläche zur Verfügung gestellt wird.

Das erfindungsgemäße Flächenklimatisierungselement mit den Merkmalen des Anspruchs 15 zeichnet sich dadurch aus, dass der erste Anschluss mit einem ersten Nebenanschluss wirkverbunden ist, der zumindest derselben Seitenkante wie der erste Anschluss zugeordnet ist, und/oder dass der zweite Anschluss mit einem zweiten Nebenanschluss wirkverbunden ist, der zumindest derselben Seitenkante wie der zweite Anschluss zugeordnet ist, sodass ein Verbindungselement entweder für eine Serienschaltung mit dem ersten oder zweiten Anschluss oder für eine Parallelschaltung mit dem ersten oder dem zweiten Nebenanschluss verbindbar ist. Es ergeben sich hieraus die bereits genannten Vorteile. Gemäß einer vorteilhaften Weiterbildung ist vorgesehen, dass der Grundkörper wenigstens einen Aufnahmekanal aufweist, der sich von einer der Seitenkanten zu der anderen der Seitenkanten der unterschiedlichen Seitenkanten erstreckt, wobei der erste oder zweite Nebenanschluss dem Aufnahmekanal zugeordnet ist, und wobei für die Parallelschaltung wenigstens ein Verlängerungselement in dem Aufnahmekanal anordenbar oder angeordnet ist, das den jeweiligen Nebenanschluss von der einen Seitenkante zu der anderen Seitenkante verlängert. Besonders bevorzugt ist vorgesehen, dass der Grundkörper zwei Aufnahmekanäle aufweist, wobei der erste Nebenanschluss einem der Aufnahmekanäle und der zweite Nebenanschluss dem anderen der Aufnahmekanäle zugeordnet ist, sodass beide Nebenanschlüsse an beiden Seitenkanten des Grundkörpers kontaktierbar sind. Es ergeben sich hierdurch die bereits genannten Vorteile. Weitere Merkmale und Vorteile ergeben sich aus dem zuvor Beschriebenen sowie aus den Ansprüchen.

Im Folgenden soll die Erfindung anhand der Zeichnung näher erläutert werden. Dazu zeigen
- Figur 1: ein Flächenklimatisierungselement für ein Flächenklimatisierungssystem in einer Draufsicht,
- Figur 2: das Flächenklimatisierungselement in einer Seitenansicht,
- Figur 3: einen ersten Steckverbinder des Flächenklimatisierungssystems,
- Figur 4: einen zweiten Steckverbinder des Flächenklimatisierungssystems,
- Figur 5: eine schematische Darstellung des Flächenklimatisierungssystems in einer Serienschaltung,
- Figur 6: eine schematische Darstellung des Flächenklimatisierungssystems in einer Parallelschaltung,
- Figur 7: eine Schnittdarstellung des Flächenklimatisierungssystems, und
- Figur 8: das Flächenklimatisierungssystem in einer vereinfachten perspektivischen Darstellung.

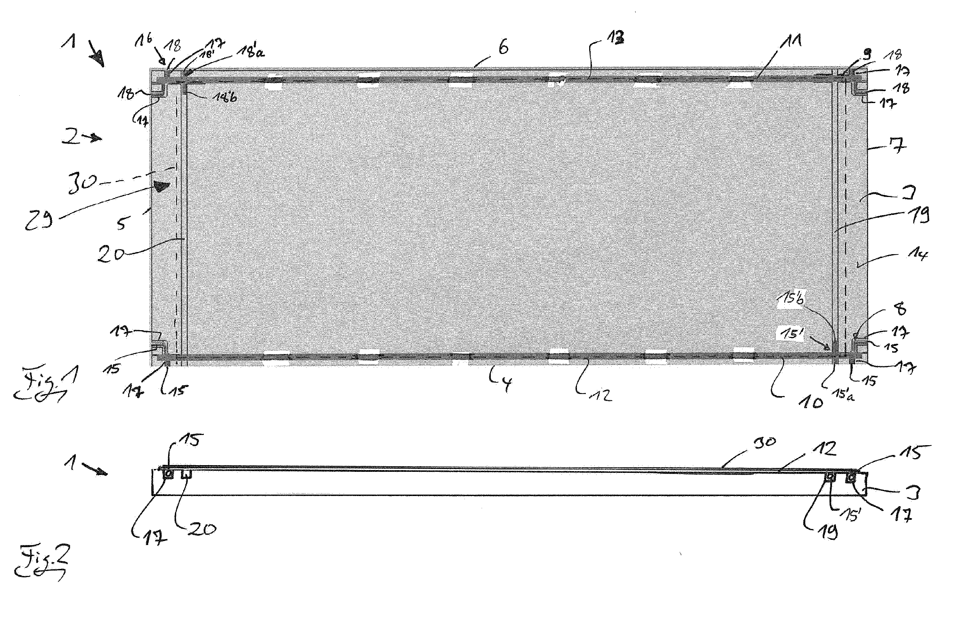

Figur 1 zeigt eine Draufsicht auf ein Flächenklimatisierungselement 1 für ein Flächenklimatisierungssystem 2 in einer Draufsicht. Figur 2 zeigt das Flächenklimatisierungselement 1 beziehungsweise Flächenklimatisierungsmodul in einer Seitenansicht.

Das Flächenklimatisierungselement 1 weist einen Grundkörper 3 auf, der aus einem elektrisch isolierenden und vorzugsweise auch aus einem wärmeisolierenden Material gefertigt ist.

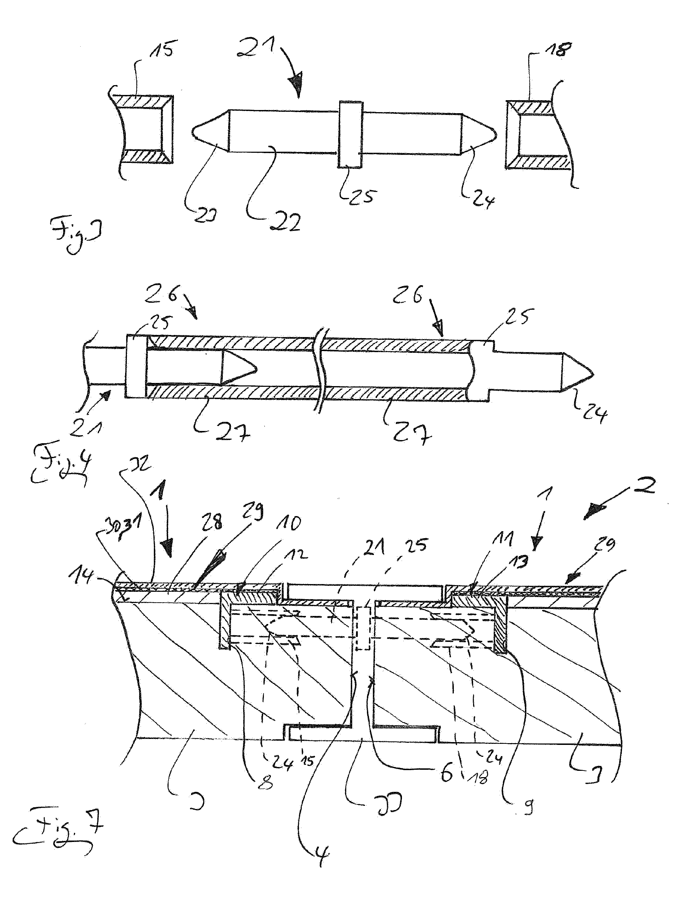

Der Grundkörper 3 weist eine rechteckförmige Kontur auf, mit jeweils zwei einander gegenüberliegenden Seitenkanten 4, 6 und 5, 7, wobei die Seitenkanten 5, 7 kürzer ausgebildet sind als die Seitenkanten 4, 6. Der Grundkörper 3 weist den Seitenkanten 4, 6 zugeordnet jeweils eine Aufnahmevertiefung 8, 9 auf, in welche jeweils eine Anschlussleiste 10, 11 eingesteckt ist. Die Anschlussleisten 10, 11 sind identisch zueinander ausgebildet und spiegelverkehrt zueinander ausgerichtet. Im Folgenden wird die Anschlussleiste 10 als die erste Anschlussleiste und die Anschlussleiste 11 als die zweite Anschlussleiste des Flächenklimatisierungselements 1 bezeichnet. Die Anschlussleisten 10, 11 weisen jeweils eine streifenförmige Elektrode 12, 13 auf, die sich jeweils entlang der jeweiligen Seitenkante 4, 6 insbesondere parallel dazu erstrecken. Die Elektroden 12, 13 liegen dabei auf der Oberseite 14 des Grundkörpers 3 auf. Die Anschlussleisten 10, 11 weisen außerdem jeweils einen senkrecht zu der jeweiligen Elektrode 12, 13 ausgerichteten Abschnitt auf, der in die Aufnahmevertiefung des Grundkörpers 3 im Wesentlichen spielfrei eingesteckt ist, wie auch mit Bezug auf Figur 7 näher erläutert werden soll:

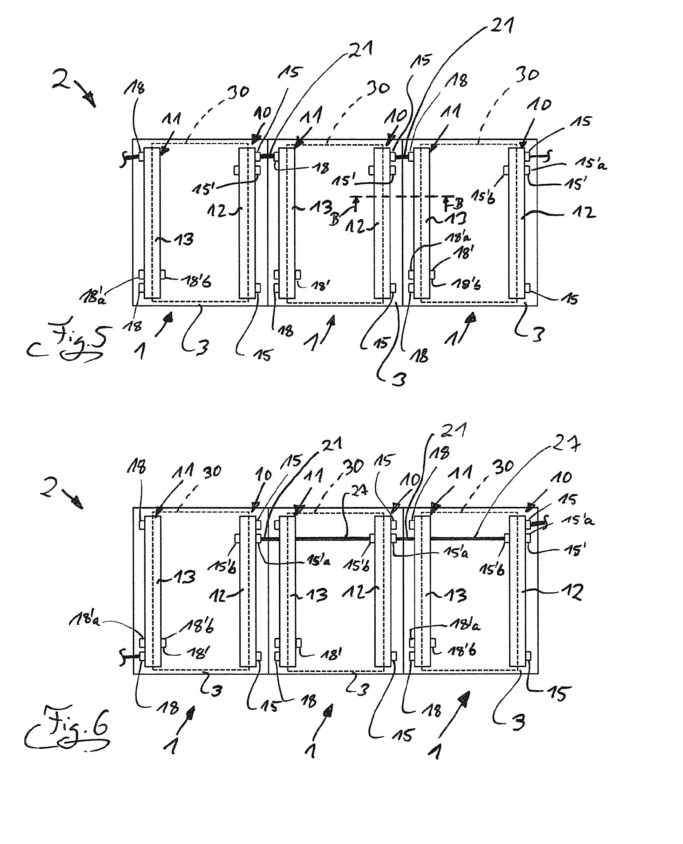

Figur 7 zeigt einen Längsschnitt durch das Flächenklimatisierungssystem 2 entlang der Linie B-B in Figur 5, anhand dessen weitere vorteilhafte Aspekte des Flächenklimatisierungssystems 1 erläutert werden sollen. Insbesondere ist hierbei ein schlichter Aufbau der Flächenklimatisierungselemente 1 zu erkennen. Wie zuvor bereits erwähnt, sind in jedem Grundkörper 3 Aufnahmevertiefungen 8, 9 ausgebildet, in welcher die jeweils L-förmige Anschlussleiste 10 beziehungsweise 11 mit dem von der jeweiligen Elektrode 12, 13 senkrecht abstehenden Schenkel eingesteckt ist. Die Elektroden 12, 13 liegen auf der Oberseite 14 des Grundkörpers 3 auf. Zwischen den Elektroden 12, 13 eines Flächenklimatisierungselements 11 ist ein Füllelement 28 vorgesehen, dass den Raum zwischen den Elektroden 12, 13 eines Flächenklimatisierungselements 1 füllt, sodass die Elektroden 12 und 13 zusammen mit dem Füllelement 28 eine gemeinsame ebene Oberfläche bilden. Alternativ könnte das Füllelement 28 auch einstückig mit dem Grundkörper 3 ausgebildet sein.

Auf die Elektroden 12, 13 und das Füllelement 28 ist jeweils ein ansteuerbares Klimatisierungselement 29 aufgebracht. Vorliegend handelt es sich bei dem Klimatisierungselement 29 um ein Heizelement 30, das durch eine CNT-Beschichtung 31 gebildet ist, die auf das Füllelement 28 und zumindest bereichsweise auf jede der Elektroden 12, 13 aufgedruckt ist. Durch das Aufdrucken der CNT-Beschichtung 31 auf die Elektroden 12, 13, wird das Heizelement 30 elektrisch mit den Elektroden 12, 13 beziehungsweise den Anschlussleisten 10, 11 verbunden. Die Elektroden 12, 13 beziehungsweise die Anschlussleisten 10, 11 sind somit durch das Heizelement 30 miteinander wirkverbunden. Durch Bestromen der CNT-Beschichtung 31 beziehungsweise des Heizelements 30 erzeugt dieses Wärme, die in einen das Flächenklimatisierungssystem 1 aufweisenden Raum abgegeben wird. Die CNT-Beschichtung 31 bildet somit ebenfalls eine ebene Oberfläche für das jeweilige Flächenklimatisierungselement 1.

Zusätzlich sind die Elektroden 12, 13 vorzugsweise auf der Oberseite 14 des Grundkörpers 3 festgeklebt. Die Anschlussleisten 10, 11 weisen somit im Querschnitt gesehen einen im Wesentlichen L-förmiges Profil auf, wobei ein Schenkel die jeweilige Elektrode 12, 13 und der andere Schenkel den in die Aufnahmevertiefung 8 beziehungsweise 9 eingesteckten Abschnitt bildet. Die Anschlussleisten 10, 11 weisen weiterhin gemäß Figuren 1 und 2 Anschlüsse 15, 18 auf, die als Steckeraufnahmen 16 ausgebildet sind. Dazu sind die Anschlüsse 15, 18 jeweils hülsenförmig ausgebildet und mit der jeweiligen Anschlussleiste 10, 11 elektrisch verbunden. Insbesondere sind die Anschlüsse 15, 18 einstückig mit der jeweiligen Anschlussleiste 10, 11 ausgebildet. Die Anschlüsse 15, 18 liegen in randoffenen Anschlusskanälen 17 des Grundkörpers 3 ein und sind senkrecht zu der jeweiligen Seitenkante 4 beziehungsweise 6 ausgerichtet. Jede der Anschlussleisten 10, 11 weist vorliegend mehrere der Anschlüsse 15, 18 auf, wobei vorliegend jeweils zwei Anschlüsse 15, 18 einer Seitenkante 4 beziehungsweise 6 und zwei weitere Anschlüsse 15 jeweils einer der Seitenkanten 5 beziehungsweise 7 zugeordnet sind.

Weiterhin weisen die Anschlussleisten 10,11 jeweils einen Nebenanschluss 15', 18' auf. Der Nebenanschluss 15', 18' ist ebenfalls jeweils hülsenförmig als Steckeraufnahme ausgebildet und mit der Anschlussleiste 10 beziehungsweise 11 insbesondere einstückig verbunden. Insbesondere ist vorgesehen, dass die Anschlüsse 15, 18 und die Nebenanschlüsse 15', 18' mit dem in den Grundkörper 3 eingesteckten Schenkel der jeweiligen Anschlussleiste 10, 11 insbesondere einstückig verbunden sind.

Der Grundkörper 3 weist weiterhin zwei sich parallel zueinander erstreckende Aufnahmekanäle 19, 20 auf, die sich jeweils von der Seitenkante 4 bis zu der gegenüberliegenden Seitenkante 6 durchgehend erstrecken, sodass die Aufnahmekanäle 19 und 20 ebenfalls randoffen zu den Seitenkanten 4 beziehungsweise 6 hin ausgebildet sind. In jeweils einem der Aufnahmekanäle 19, 20 liegt der Nebenanschluss 18 der ersten beziehungsweise der zweiten Anschlussleiste 10, 11 ein, wobei die hülsenförmigen Nebenanschlüsse 15', 18' dabei in Längserstreckung des jeweiligen Aufnahmekanals 19, 20 ausgerichtet sind.

Während die Anschlüsse 15, 18 in nur eine Richtung, nämlich zu der jeweils zugeordneten Seitenkante hin weisen, sind die Nebenanschlüsse 15', 18' derart ausgebildet, dass sie in beide Richtungen des jeweiligen Aufnahmekanals 19, 20 und damit sowohl zur Seitenkante 6 als auch zur Seitenkante 4 hin jeweils einen hülsenförmigen Steckanschluss 15'a, 18'a und 15'b, 18'b aufweisen. Die Steckanschlüsse 15'b, 18'b weisen dabei jeweils zu der der jeweiligen Anschlussleiste 10, 11 gegenüberliegenden Seitenkante, sodass der Steckanschluss 15'b der Anschlussleiste 10 zur Seitenkante 6 hin in dem Aufnahmekanal 19 weist. Entsprechendes gilt für den Nebenanschluss 18' der Anschlussleiste 11.

Durch die einstückige Ausbildung der Anschlüsse 15, 18 und der Nebenanschlüsse 15', 18' mit der jeweiligen Anschlussleiste 10 beziehungsweise 11 sind die Anschlüsse 15, 18 mit den Nebenanschlüssen 15', 18' einstückig wirkverbunden, vorliegend elektrisch leitend verbunden, sodass die Anschlüsse 15, 18 und der Nebenanschluss 15', 18' einer Anschlussleiste 10 oder 11 stets das gleiche elektrische Potential aufweisen.

Figur 3 zeigt in einer vereinfachten Darstellung einen ersten Steckverbinder 21 als Verbindungselement des Flächenklimatisierungssystems 2, der dazu genutzt wird, benachbarte Flächenklimatisierungselemente 1 miteinander zu verbinden. Der erste Steckverbinder 21 ist als Verbindungszapfen 22 ausgebildet, der beidendig jeweils eine kegelförmige Spitze 23, 24 aufweist, die eine Einführhilfe bildet.

Mittig weist der Verbindungszapfen einen durch einen sich über den gesamten Umfang erstreckenden Radialvorsprung gebildeten Axialanschlag 25 auf. Der Außendurchmesser des Verbindungszapfens 22 entspricht dabei einem Innendurchmesser der hülsenförmigen Anschlüsse 15, 18, sodass der Verbindungszapfen 22 in den Anschluss 15, 18 eines ersten Flächenklimatisierungselements 1 und in den Anschluss 18 eines zweiten Flächenklimatisierungselements 1, das zu dem ersten Flächenklimatisierungselement 1 benachbart ist, zur elektrischen Kontaktierung der Flächenklimatisierungselemente 1 miteinander eingesteckt werden kann. Dadurch ist eine einfache Montage des Flächenklimatisierungssystems 2 möglich.

Figur 4 zeigt einen zweiten Steckverbinder 26 als zweites Verbindungselement in zwei unterschiedlichen Ausführungsformen. Auf der rechten Seite ist der Steckverbinder 26 als einteiliges Verbindungselement aufgebaut, das im Wesentlichen dem Steckverbinder 21 entspricht, jedoch eine Länge aufweist, die in etwa der Länge des jeweiligen Aufnahmekanals 19, 20 entspricht. Dabei ist vorgesehen, dass der zweite Steckverbinder 26 einen maximalen Außenumfang aufweist, der im Wesentlichen der Breite der Aufnahmekanäle 19, 20 entspricht, sodass der Steckverbinder 26 in den Aufnahmekanälen 19, 20 im Wesentlichen spielfrei geführt ist.

Gemäß einer alternativen Ausführungsform, die links in Figur 4 gezeigt ist, wird der zweite Steckverbinder 26 von dem ersten Steckverbinder 21 und einem hülsenförmigen Verlängerungselement 27 gebildet. Das Verlängerungselement 27 weist zweckmäßigerweise einen Innendurchmesser auf, der dem Innendurchmesser der Anschlüsse 15, 18 entspricht, wobei bevorzugt beidseitig in das Verlägerungselement 27 jeweils einer der ersten Steckverbinder 21 eingesteckt ist. Dadurch ist ein mehrteiliger, vorliegend dreiteiliger Steckverbinder 26 vorgesehen. Die Länge des Verlängerungselements 27 entspricht dabei etwa der Länge der Aufnahmekanäle 19, 20 beziehungsweise der Breite des Flächenklimatisierungselements 1.

Der zweite Steckverbinder 26 beziehungsweise das Verlängerungselement 27 ist nunmehr dazu ausgebildet, in einen der Aufnahmekanäle 20 eingeführt, insbesondere eingeschoben zu werden, um einendig den Nebenanschluss 15', 18' an dem jeweiligen Steckanschluss 15'b, 18'b einer der Anschlussleisten 11 elektrisch zu kontaktieren, und anderendig in dem Aufnahmekanal 20 liegend, an der ersten Anschlussleiste 10 vorbeigeführt zu werden, um die erste Anschlussleiste 11 beziehungsweise deren Nebenanschluss 18', 15' eines benachbarten Flächenklimatisierungselementes 1 an dem Steckanschluss 18'a zu kontaktieren. Das Verlängerungselement 27 verlängert somit den jeweiligen Nebenanschluss 15', 18' von der einen Seitenkante 4, 6 bis zu der anderen Seitenkante 6, 4. Ist in dem jeweiligen Aufnahmekanal jeweils eines der Verlängerungselemente 27 vorgesehen, so reicht es bei der Montage aus, den ersten Steckverbinder vorzusehen und entsprechend zu positionieren, um die ersten Nebenanschlüsse 15', 18' benachbarter Flächenelemente 1 miteinander zur verbinden, indem der erste Steckverbinder 21 einerseits mit einem Nebenanschluss 15', 18' eines Flächenklimatisierungselementes 1 und andererseits mit dem Verlängerungselement 27 des benachbarten Flächenklimatisierungselementes verbunden beziehungsweise zusammengesteckt wird. Die Aufnahmekanäle 19, 20 sind dabei bevorzugt beabstandet beziehungsweise getrennt oder isoliert von der Anschlussleiste, deren Nebenanschluss 15', 18' dem anderen Aufnahmekanal 20,19 zugeordnet ist, angeordnet/ausgebildet. Liegen somit zwei Flächenklimatisierungselemente 1 an ihren längeren Seitenkanten 4,6 aneinander an, sodass die Seitenkante 4 des ersten Flächenklimatisierungselements 1 einer Seitenkante 6 des benachbarten Flächenklimatisierungselements 1 zugeordnet ist, so können jeweils die zweiten Anschlussleisten 11 durch den zweiten Steckverbinder 26 direkt miteinander elektrisch verbunden werden. Dadurch werden die Flächenklimatisierungselemente 1 elektrisch parallel geschaltet. Wird anstelle des zweiten Steckverbinders 26 der erste Steckverbinder 21 gewählt, um die Anschlüsse 15, 18 benachbarter Flächenklimatisierungselemente 1 miteinander zu verbinden, entspricht eine Serienschaltung der Flächenklimatisierungselemente 1. Mit Bezug auf Figuren 5, 6 soll dies näher erläutert werden.

Figuren 5 und 6 zeigen jeweils das Flächenklimatisierungssystem 2 beziehungsweise einen montierten Flächenverbund, der aus dem Flächenklimatisierungssystem 2 gefertigt wurde.

Figur 5 zeigt in Draufsicht das Flächenklimatisierungssystem 2 mit drei Flächenklimatisierungselementen 1, die in Reihe geschaltet sind. Dazu liegen die drei Flächenklimatisierungselemente 1 an ihren längeren Seitenkanten 4, 6 aneinander an, wobei ein erster Anschluss 15 einer ersten Anschlussleiste 10 mit dem Anschluss 18 der zweiten Anschlussleiste 11 des benachbarten Flächenklimatisierungselements 11 durch den ersten Steckverbinder 21 elektrisch verbunden ist. Der Strom, der durch das Flächenklimatisierungssystem 1 fließt, fließt somit von einer an eine Stromquelle angeschlossenen zweiten Anschlussleiste 11 des ganz rechts außen liegenden Flächenklimatisierungselements 1, durch das Heizelement 30 zu der zweiten Anschlussleiste 11, von dort durch den Steckverbinder 21 zu der ersten Anschlussleiste 10 des in der Mitte liegenden Flächenklimatisierungselementes 1, von dort durch das Heizelement 30 des in der Mitte liegenden Flächenklimatisierungselementes 1 zu dessen zweiter Anschlussleiste 11, von dort durch den Steckverbinder 21 zu der ersten Anschlussleiste 10 des links außen liegenden Flächenklimatisierungselements 1, und durch das Heizelement 30 des links außen liegenden Flächenklimatisierungselements 1 und zu der zweiten Anschlussleiste 11. Die Heizelemente 30 sind somit in Reihe geschaltet.

Figur 6 zeigt eine alternative Verwendung des Flächenklimatisierungssystems 2, bei welchem die Heizelemente 30 beziehungsweise die Flächenklimatisierungselemente 1 parallel zueinander geschaltet sind. Im Unterschied zu dem vorhergehenden Ausführungsbeispiel sind anstelle der Steckverbinder 21 die Steckverbinder 26 oder die Steckverbinder 21 und die Verlängerungselemente 27 zwischen benachbarten Flächenklimatisierungselementen 1 vorgesehen. Dadurch ist die erste Anschlussleiste 10 des ganz rechts außen liegenden Flächenklimatisierungselements 1 elektrisch mit der ersten Anschlussleiste 10 des in der Mitte liegenden Flächenklimatisierungselements 1 verbunden, welches wiederum durch einen weiteren Steckverbinder 26 oder einen weiteren Steckverbinder 21 zusammen mit einem Verlängerungselement 27 mit der ersten Anschlussleiste 10 des links außen liegenden Flächenklimatisierungselements 1 elektrisch verbunden ist.

Durch die Wahl der elektrischen Verbindung der Anschlüsse 15, 18 oder Nebenanschlüsse 15', 18', kann somit bei der Montage des Flächenklimatisierungssystems 1 auf einfache Art und Weise entschieden werden, ob die Flächenklimatisierungselemente 1 parallel oder in Serie beziehungsweise in Reihe geschaltet werden sollen. Durch das Vorsehen der Aufnahmekanäle 18, 19 in den Grundkörpern 3 der Flächenklimatisierungselemente 1 wird gewährleistet, dass die Unterscheidung zwischen Reihenschaltung und Parallelschaltung zum einen schnell ersichtlich und zum anderen einfach und fehlerfrei durchführbar ist.

Figur 7 zeigt weiterhin, dass zum Schutz der Klimatisierungselemente 29 jedes Flächenklimatisierungselement 1 mit einer insbesondere aufgedruckten Schutzdecke 32 aus einem elektrisch nicht leitfähigen Material bedeckt ist.

Wie in Figur 7 weiterhin gezeigt ist, ist außerdem zur leichteren Anordnung und Montage des Flächenklimatisierungselements 1 vorgesehen, zwischen benachbarten Flächenklimatisierungselementen 1 Profilleisten 33 vorzusehen. Gemäß dem vorliegenden Ausführungsbeispiel ist die Profilleiste 33 I-förmig ausgebildet, sodass sie die benachbarten Flächenklimatisierungselemente 1 an ihren Randbereichen der einander zugewandten Seitenkanten 4, 6 bereichsweise umgreift. Die Flächenklimatisierungselemente 1 weisen dabei in diesem Randbereich jeweils eine Verjüngung auf, deren Höhe dem Abstand der beiden Querträger des I-förmigen Profilteils 33 entspricht, sodass die benachbarten Flächenklimatisierungselemente 1 durch die Profilleiste 33 in ihrer Höhe zueinander ausgerichtet werden. Insbesondere ist vorgesehen, dass die Flächenklimatisierungselemente 1 an ihren Seitenkanten 4, 6 Einführschrägen (hier nicht dargestellt) aufweisen, die die Montage erleichtern. An den den Anschlüssen 15 und den Verbindungsanschlüssen 18 gegenüberliegenden Stellen weist beziehungsweise weisen die Profilleisten 33 entsprechende Aussparungen auf, sodass die Steckverbinder 21 oder 26 durch die Profilleisten 33 hindurchgeführt werden können. Beispielhaft ist in Figur 7 ein Steckverbinder 21 gestrichelt zum besseren Verständnis dargestellt.

An dem letzten in einer Reihe befindlichen Flächenklimatisierungselement des Flächenklimatisierungssystems 2 beziehungsweise des Flächenverbunds aus Flächenklimatisierungselementen 1 ist vorzugsweise die freiliegende Seitenkante 4 oder 6 durch eine C-förmige Profilleiste zum Schutz der Komponenten und gegebenenfalls zur Stromführung, insbesondere Stromrückführung, eingefasst.

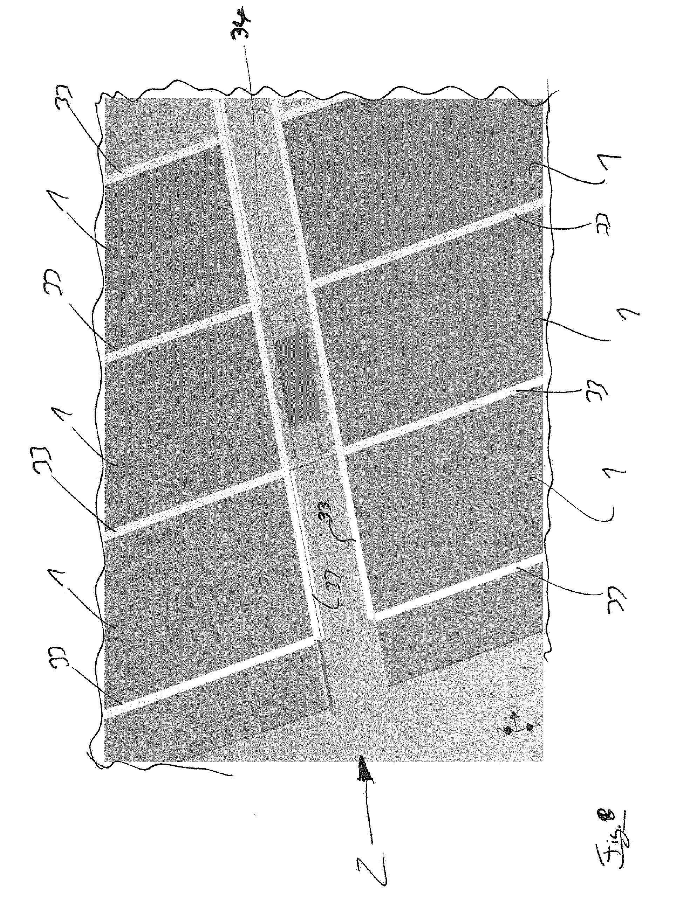

Figur 8 zeigt in einer vereinfachten perspektivischen Darstellung einen aus den Flächenklimatisierungselementen 1 des Flächenklimatisierungssystems 2 gebildeten Flächenverbund. Dieser weist zwei Reihen von Flächenklimatisierungselementen 1 auf. Die beiden Reihen sind beabstandet zueinander angeordnet, wobei zwischen den beiden Reihen auf Höhe von zwei einander gegenüberliegenden Flächenklimatisierungselementen 1 ein Flächensteuerelement 34 eingesetzt ist. Das Flächensteuerelement 34 weist eine Höhe auf, die der Höhe der Flächenklimatisierungselemente 1 entspricht. Darüber hinaus sind die Seitenkanten des Flächensteuerelements 34 entsprechenden Seitenkanten der Flächenklimatisierungselemente ausgebildet, sodass das Flächensteuerelement 34 ebenfalls mit seinem Randbereich in die I-förmigen Profilleisten zur Anordnung und Arretierung einschiebbar ist, wie in Figur 8 gezeigt. Das Flächensteuerelement 34 ist dabei den schmaleren beziehungsweise kürzeren Seitenkanten 3, 5 der einander gegenüberliegenden Flächenklimatisierungselemente 1 der beiden Reihen zugeordnet. In diesem Fall dienen die Anschlüsse 15, 18 die den Seitenkanten 5, 7 zugeordnet sind, zur Verbindung mit dem Flächensteuerelement 34, das entsprechende Anschlüsse 15, 18 aufweist. Durch das Vorsehen der Steckverbinder 21 zwischen den Flächenstellelement 34 und dem benachbarten Flächenklimatisierungselementen 1 kann dieses somit mit diesen elektrisch verbunden werden.

Das Flächensteuerelement 34 weist zweckmäßigerweise eine Steuereinheit sowie eine Leistungselektronik zum Betreiben der Flächenklimatisierungselemente auf. Die Flächenklimatisierungselemente 1 können dabei, wie zuvor bereits erläutert, in einer Reihenschaltung oder Parallelschaltung miteinander wirkverbunden sein.

Gemäß einem weiteren Ausführungsbeispiel (hier nicht dargestellt) können auch mehrere Flächensteuerelemente 34 vorgesehen sein, um zumindest zwei Flächenklimatisierungselemente unabhängig voneinander betreiben zu können. Dadurch ist es beispielsweise möglich, je nach Anforderungen an die Klimatisierung bestimmte Bereiche des Flächenverbunds derart anzusteuern, da sie eine höhere Heizleistung erzeugen, als andere Bereiche.

Während die obenstehenden Ausführungsbeispiele sich stets auf elektrisch betreibbare Flächenklimatisierungselemente, die zum Erbringen einer Heizleistung elektrisch angesteuert werden, beziehen, ist es auch denkbar, das beschriebene Prinzip auf Flächenklimatisierungssysteme anzuwenden, die fluidbetriebene Klimatisierungselemente aufweisen. So kann vorgesehen sein, dass anstelle der elektrisch betreibbaren Heizelemente 30 Fluidkanäle, insbesondere Heizkanäle zwischen den Anschlussleisten vorgesehen sind, wobei die Anschlussleisten 11, 10 dann ebenfalls nicht zur Führung eines elektrischen Stroms sondern zur Führung eines Fluids ausgebildet sind. Durch eine hülsenförmige Ausbildung der Verbindungselemente beziehungsweise der Steckverbinder 21, 26 werden Fluidkanäle zum Verbinden hydraulischer Anschlussleisten zur Verfügung gestellt, die ebenfalls eine Parallele- oder Reihenschaltung, benachbarter Flächenklimatisierungselemente, je nach Bedarf, bei der Montage erlauben.

## Patentansprüche

1. Flächenklimatisierungssystem (2), mit mehreren gleich ausgebildeten Flächenklimatisierungselementen (1), die jeweils einen rechteckigen Grundkörper (3), wenigstens ein an dem jeweiligen Grundkörper (3) angeordnetes und ansteuerbares Klimatisierungselement (29) und Anschlüsse (15, 18) zum Kontaktieren des Klimatisierungselements (29) aufweisen, wobei das Klimatisierungselement (29) einen ersten der Anschlüsse (15) mit einem zweiten der Anschlüsse (18) verbindet, und wobei der erste Anschluss (15) und der zweite Anschluss (18) an unterschiedlichen Seitenkanten (4,6) des Grundkörpers (3) angeordnet sind, und mit mindestens einem Verbindungselement (21, 26) zur Verbindung der Anschlüsse (15, 18) benachbarter Flächenklimatisierungselemente (1), **dadurch gekennzeichnet, dass** der erste Anschluss (15) mit einem ersten Nebenanschluss (15') wirkverbunden ist, der zumindest derselben Seitenkante (4) wie der erste Anschluss (15) zugeordnet ist, und/oder dass der zweite Anschluss (18) mit einem zweiten Nebenanschluss (18') wirkverbunden ist, der zumindest derselben Seitenkante (6) wie der zweite Anschluss (18) zugeordnet ist, und dass die Flächenklimatisierungselemente (1) derart ausgebildet sind, dass das Verbindungselement (21, 26) wahlweise derart anordenbar/angeordnet ist, dass es entweder für eine Serienschaltung benachbarter Flächenklimatisierungselemente (1) einen ersten Anschluss (15) mit einem gegenüberliegenden zweiten Anschluss (18) der benachbarten Flächenklimatisierungselemente (1) oder für eine Parallelschaltung der benachbarten Flächenklimatisierungselemente (1) erste Nebenanschlüsse (15') oder zweite Nebenanschlüsse (18) der benachbarten Flächenklimatisierungselemente (1) miteinander verbindet.

2. Flächenklimatisierungssystem nach Anspruch 1, **dadurch gekennzeichnet, dass** der Grundkörper (3) mindestens einen Aufnahmekanal (19,20) aufweist, der sich von einer der Seitenkanten (4) zu der anderen der Seitenkanten (6) erstreckt, dass der erste Nebenanschluss (15') oder der zweite Nebenanschluss dem Aufnahmekanal (19, 20) zugeordnet ist, und dass für die Parallelschaltung wenigstens ein Verlängerungselement (27) in dem Aufnahmekanal (19, 20) angeordnet ist, das den jeweiligen Nebenanschluss (15', 18') von der einen Seitenkante (4) bis zu der anderen Seitenkante (6) der unterschiedlichen Seitenkanten (4, 6) verlängert.

3. Flächenklimatisierungssystem nach einem der vorhergehenden Ansprüche, **dadurch gekennzeichnet, dass** das jeweilige Verbindungselement (21, 26) als Steckverbinder (21, 26) ausgebildet ist.

4. Flächenklimatisierungssystem nach einem der vorhergehenden Ansprüche, **dadurch gekennzeichnet, dass** der jeweilige Nebenanschluss (15', 18') in den zugeordneten Aufnahmekanal (19, 20) hinein ragt.

5. Flächenklimatisierungssystem nach einem der vorhergehenden Ansprüche, **dadurch gekennzeichnet, dass** eine maximale Breite des Steckverbinders (21, 26) und/oder des Verlängerungselements (27) zumindest im Wesentlichen der Breite des Aufnahmekanals (19, 20) entspricht.

6. Flächenklimatisierungssystem nach einem der vorhergehenden Ansprüche, **dadurch gekennzeichnet, dass** der erste Anschluss (15) mit dem ersten Nebenanschluss (15') und der zweite Anschluss (18) mit dem zweiten Nebenanschluss (18') jeweils eine Anschlussleiste (10, 11) bilden.

7. Flächenklimatisierungssystem nach einem der vorhergehenden Ansprüche, **dadurch gekennzeichnet, dass** die Anschlussleisten (10, 11) als elektrische oder als hydraulische Anschlussleisten (10, 11) ausgebildet sind.

8. Flächenklimatisierungssystem nach einem der vorhergehenden Ansprüche, **dadurch gekennzeichnet, dass** der Grundkörper (3) den unterschiedlichen, insbesondere gegenüberliegend angeordneten Seitenkanten (4,6) zugeordnet jeweils Aufnahmevertiefungen (17) aufweist, in welchen jeweils eine der Anschlussleisten (10, 11) eingesteckt ist.

9. Flächenklimatisierungssystem nach einem der vorhergehenden Ansprüche, **dadurch gekennzeichnet, dass** die elektrischen Anschlussleisten (10, 11) jeweils eine Elektrode (12, 13) aufweisen, die auf einer Oberseite (14) des Grundkörpers (3) aufliegt.

10. Flächenklimatisierungssystem nach einem der vorhergehenden Ansprüche, **dadurch gekennzeichnet, dass** die Elektroden (12, 13) einstückig mit der jeweiligen Anschlussleiste (10,11) ausgebildet sind.

11. Flächenklimatisierungssystem nach einem der vorhergehenden Ansprüche, **dadurch gekennzeichnet, dass** die Elektroden (12, 13) eines Flächenklimatisierungselementes (1) durch ein das Klimatisierungselement bildendes und elektrisch betreibbares Heizelement (30), insbesondere eine CNT-Beschichtung, miteinander verbunden sind.

12. Flächenklimatisierungssystem nach einem der vorhergehenden Ansprüche, **dadurch gekennzeichnet, dass** das Heizelement (30) eine insbesondere zumindest im Wesentlichen ebene Oberfläche des Flächenklimatisierungselements (1) bildet.

13. Flächenklimatisierungssystem nach einem der vorhergehenden Ansprüche, **gekennzeichnet durch** wenigstens ein Flächensteuerelement (34), das eine den Flächenklimatisierungselementen (1) entsprechende Höhe aufweist, und an einer Seitenkante (5, 7) zumindest eines Flächenklimatisierungselementes (1) anordenbar und **durch** das Verbindungselement (21, 26) mit zumindest einer Anschlussleiste (10, 11) des Flächenklimatisierungselements (1) verbindbar ist.

14. Flächenklimatisierungssystem nach einem der vorhergehenden Ansprüche, **gekennzeichnet durch** I-förmige Profilleisten (33), die zwischen benachbarten Flächenklimatisierungselementen (1) und/oder Flächensteuerelemente (34) zu deren Ausrichtung zueinander anordenbar sind.

15. Flächenklimatisierungselement (1), insbesondere für ein Flächenklimatisierungssystem (2) nach einem der Ansprüche 1 bis 14, das jeweils einen rechteckigen Grundkörper (3), wenigstens ein an dem Grundkörper (3) angeordnetes und ansteuerbares Klimatisierungselement (29) und Anschlüsse (15, 18) zum Kontaktieren des Klimatisierungselements (29) aufweist, wobei das Klimatisierungselement (29) einen ersten der Anschlüsse (15) mit einem zweiten der Anschlüsse (18) verbindet, und wobei der erste Anschluss (15) und der zweite Anschluss (18) an unterschiedlichen Seitenkanten (4,6) des Grundkörpers (3) angeordnet sind, **dadurch gekennzeichnet,** der erste Anschluss (15) mit einem ersten Nebenanschluss (15') wirkverbunden ist, der zumindest derselben Seitenkante (4) wie der erste Anschluss (15) zugeordnet ist, und/oder dass der zweite Anschluss (18) mit einem zweiten Nebenanschluss (18') wirkverbunden ist, der zumindest derselben Seitenkante (6) wie der zweite Anschluss (18) zugeordnet ist, sodass ein Verbindungselement (21) für eine Serienschaltung benachbarter Flächenklimatisierungselemente (1) mit dem ersten Anschluss (15) oder für eine Parallelschaltung benachbarter Flächenklimatisierungselemente (1) mit dem ersten Nebenanschluss (15') verbindbar ist.
